# EUROPÄISCHE PATENTANMELDUNG

(11) **EP 1 749 644 A1**
(43) Veröffentlichungstag der Anmeldung: **07.02.2007**
(21) Anmeldenummer: 05017000.0
(22) Anmeldetag: 04.08.2005
(51) Int. Cl.: B29C 70/66, C08J 9/32

(54) **Verfahren zum Herstellen von Kunststoffteilen**

(71) Anmelder: Lufthansa Technik AG, 22335 Hamburg (DE)
(72) Erfinder: Wolfgang Sutter, 25469 Halstenbek (DE)
(74) Vertreter: Keussen, Christof

(57) **Zusammenfassung**

Das Verfahren zum Herstellen von Kunststoffteilen, insbesondere Kunststoffprofilen, bei dem Füllstoffe in ein pulver- oder granulatförmiges thermoplastisches Kohlenstoffmaterial eingebracht werden, diese Mischung erwärmt und in die Kunststoffteile geformt wird, zeichnet sich dadurch aus, dass expandierbare hohle Teilchen als Füllstoffe verwendet werden war, die mit einer bei erhöhter Temperatur verdampfenden Flüssigkeit gefüllt sind.

## Beschreibung

Die Erfindung betrifft ein Verfahren zum Herstellen von Kunststoffteilen, insbesondere Kunststoffprofilen, bei dem Füllstoffe in ein pulver- oder granulatförmiges thermoplastisches Kohlenstoffmaterial eingebracht werden, diese Mischung erwärmt und in die Kunststoffteile geformt wird.

Die Einbringung von Füllstoffen bei diesem bekannten Verfahren kann verschiedenen Zwecken dienen. Durch die Füllstoffe kann insbesondere der Preis des fertigen Erzeugnisses verringert werden, wenn relativ teurem Kunststoff Füllstoffe zugefügt werden, die billiger sind, wobei selbstverständlich dabei darauf geachtet werden muss, dass die Qualität des fertigen Produktes nicht schlechter wird, als dies für den gewünschten Zweck erforderlich ist. So wird man z. B. bei Verpackungsteilen aus Kunststoff häufig keinen besonderen Wert auf hohe Qualität, sondern eher auf geringe Kosten legen.

In vielen Fällen kommt es aber nicht so sehr auf den Preis, als vielmehr auf das Gewicht bzw. Gewichtsersparnis bei den Kunststoffteilen an. Dies trifft insbesondere für die Flugzeugindustrie zu, wo man immer bestrebt ist, Teile durch leichtere Teile zu ersetzen, soweit diese trotz ihres geringeren Gewichtes noch den strengen Qualitätsanforderungen genügen.

Die Aufgabe der Erfindung besteht in der Schaffung eines Verfahrens der eingangs genannten Art, mit dem Kunststoffteile von wesentlich geringerem Gewicht hergestellt werden können, ohne dass große Qualitätseinbussen auftreten.

Die erfindungsgemäße Lösung besteht darin, dass expandierbare hohle Teilchen als Füllstoffe verwendet werden, die mit einer bei erhöhter Temperatur verdampfenden Flüssigkeit gefüllt sind.

Wird mit Hilfe von Erwärmung das thermoplastische Kunststoffmaterial in den plastischen Zustand übergeführt, so verdampft gleichzeitig die Flüssigkeit in den expandierbaren hohlen Teilchen, so dass sich deren Volumen erhöht. Wird das fertige Teil dann abgekühlt, so bleiben aufgrund der expandierbaren hohlen Teilchen größere Hohlräume im Kunststoffteil bestehen, wodurch das Gewicht des Kunststoffteils geringer wird, als wenn es aus massivem Kunststoff bestehen würde.

Insbesondere wird man Hohlkugeln als Füllstoffe verwenden.

Als thermoplastischer Kunststoff ist Polypropylen sehr geeignet. Ein anderer thermoplastischer Kunststoff, der Verwendung finden kann, ist Polyethylen, das bei der Herstellung der Kunststoffteile auf Temperaturen von ungefähr 170°C erwärmt wird.

Insbesondere hat es sich aber als besonders vorteilhaft herausgestellt, wenn Polycarbonat als thermoplastischer Kunststoff verwendet wird und die Mischung auf Temperaturen von bis zu ungefähr 300°C erwärmt wird. Es ist also eine wesentlich größere Erwärmung möglich, als dies bei Polypropylen oder Polyethylen der Fall ist. Diese und ähnliche Kunststoffe haben nämlich einen Schmelzpunkt von bis zu 220°C, so dass sie bei Temperaturen von ungefähr 300°C nicht verarbeitet werden können.

Als Material, aus denen die Hülle in der Füllstoffe hergestellt werden war, hat sich ein Acrylnitril-Copolymer als besonders vorteilhaft erwiesen. Die durchschnittliche Partikelgröße liegt dabei vorteilhafterweise ungefähr 10 bis 30 µm, wobei die Hüllenstärke vorteilhafterweise circa 3 bis 7 µm beträgt.

Zweckmäßigerweise werden die Kunststoffteile im Spritzgussverfahren hergestellt.

Beim Spritzgussverfahren muss mit höherer Verarbeitungstemperatur als bei reinem Kunststoff gearbeitet werden, da der Füllstoff in Folge der Verdampfung Wärme aufnimmt. Es ist auch erforderlich, die Einspritzdüse während der Aushärtung zu verschließen, da sonst das Material unter Exparsion herausquillt. Bevor das fertige Kunststoffteil aus der Form herausgenommen wird, muss es genügend gekühlt werden, da es sonst weiter unkontrolliert aufquillt. Dies kann entweder dadurch geschehen, dass die Form gekühlt wird, man länger bis zum Herausnehmen wartet oder man die Hohlkugeln vollständig expandieren lässt, bevor das Material in die Form eingegeben wird. Dies alles sind aber Probleme, die technisch lösbar sind, so dass das Spritzgussverfahren sehr vorteilhaft ist.

Als besonders vorteilhaft hat es sich aber erwiesen, wenn die Kunststoffteile im Extrusionsverfahren hergestellt werden. Hierbei ist eine niedrigere Verarbeitungstemperatur als beim Spritzgussverfahren möglich, da die hohlen Teilchen, insbesondere die Hohlkugeln im Extruder längere Zeit verweilen und daher mehr Zeit haben, sich aufzuwärmen. Die Temperatur darf allerdings nicht so hoch gewählt werden, dass die Teilchen zerstört werden.

Das Ausmaß der Expansion der hohlen Teilchen bzw. Hohlkugeln kann über die Temperatur gesteuert werden.

Insbesondere bestehen die Hohlkugeln aus thermoplastischem Material und sind mit flüssigem Kohlenwasserstoff gefüllt. Die zunächst mehr oder weniger starren Hohlkugeln werden also bei der Erwärmung des Kunststoffmaterials ebenfalls erweicht und können sich, da die Kohlenwasserstoffe im Inneren verdampfen, expandieren. Bei der anschließenden Abkühlung tritt zwar eine gewisse Schrumpfung auf. Erstaunlicherweise geht aber das Volumen bei weitem nicht auf das Anfangsvolumen zurück, auf diese Weise nehmen also die Füllstoffe im fertigen Kunststoffteil wesentlich mehr Raum ein, als dies vor der Formung der Fall war. So kann ohne weiteres erreicht werden, dass sich das Volumen der hohlen Teilchen im Falle von Hohlkugeln bis auf das 30-fache, 40-fache oder noch mehr erhöht.

Als Treibmittel haben sich jeweils 2,5 bis 10 Gewichtsprozent, bezogen auf die Gesamtmasse der Hohlkugeln, an 3-Metylpentan und/oder 2-Metylpentan erwiesen. Vorteilhaft sind auch 7 bis 15 Gewichtsprozent Isooctan.

Damit sich die Füllstoffe, die insbesondere eine Teilchengröße von etwa 10 bis 30µm haben, gut mit dem Kunststoffmaterial mischen, hat es sich als zweckmäßig erwiesen, der Mischung Silikonöl zuzugeben, das erwärmt ist, um dessen Viskosität zu verringern. Dadurch kann erreicht werden, dass die gesamte Mischung gut mit Silikon benetzt wird, so dass Kunststoffmaterialteilchen und Füllstoffteilchen gleichmäßig vermischt werden können. Es reichen hier Silikonölmengen, die wesentlich weniger als 1 Gew.-% oder sogar als 1 Gew.-Promille der Mischung betragen. Insbesondere kann das Silikonöl auf Temperaturen von ungefähr 250°C vor dem Zugeben erwärmt werden.

Die Verweilzeit der Mischung im Extruder beträgt vorteilhafterweise 10 bis 40 s im Falle der Verwendung von Polycarbonat als thermoplastischem Kunststoff. Die Temperaturen im Extruder liegen im Bereich von 200°C bis 300°C. Der Extruder ist dabei in mehrere Bereiche aufgeteilt, in denen unterschiedliche Temperaturen vorherrschen. In der Einfüllzone, wo das Granulat zugeführt wird, herrscht zunächst eine verhältnismäßig niedrige Temperatur. Möglicherweise wird hier sogar gekühlt, damit dieser Teil des Extruders durch die sich anschließende Hochtemperaturzone nicht zu sehr erwärmt wird. In dieser in Arbeitsrichtung sich anschließenden Zone höherer Temperatur findet die Expansion der hohlen Teilchen statt. Vor dem Austreten aus dem Extruder wird das Material dann wieder auf eine niedrigere Temperatur gebracht, um weitere Expansion zu verhindern. Insbesondere will man natürlich vermeiden, dass das Material nach dem Austreten unkontrolliert expandiert.

Der Extruder ist dabei konventionell aufgebaut und muss gegenüber bekannten Extrudern nicht modifiziert werden. Er braucht daher hier nicht näher beschrieben zu werden. Für das Verständnis sollte nur erwähnt werden, dass in einem Extruder das Material durch eine oder mehrere Förderschnecken durchmischt und erwärmt wird und gegen eine enge Austrittsöffnung gedrückt wird.

Zweckmäßigerweise werden die Kunststoffteile nach dem Austritt aus dem Extruder gekühlt, damit sie hier nicht unkontrolliert weiter expandieren oder sich verformen. Insbesondere werden bei der Herstellung von Kunststoffprofilen diese nach dem Austritt aus dem Extruder zwischen Kühl- und Kalibrierflächen hindurchgeführt. Dadurch wird nicht nur eine verhältnismäßig rasche Kühlung bewirkt. Die Profile werden vielmehr auch in die gewünschte Form gebracht, die durch Extrusion allein mit dieser Genauigkeit nicht erzielt werden kann.

Insbesondere können die Kühl- und Kalibrierflächen nachgiebig gelagert sein. Diese Nachgiebigkeit darf selbstverständlich nicht zu groß sein. Es muss auf jeden Fall sichergestellt sein, dass die Dimensionsabweichungen der fertigen Teilchen von vorgegebenen Werten innerhalb vorgegebener Toleranzgrenzen liegen.

Es hat sich herausgestellt, dass mit dem erfindungsgemäßen Verfahren Gewichtseinsparungen von 30 bis 50% erzielt werden können. Erstaunlicherweise ist trotzdem die Druck- und Zugfestigkeit nur in einem Ausmaß geringer als bei massiven Teilchen aus dem gleichen Kunststoff, das für viele Anwendungen insbesondere in der Flugzeugindustrie ohne weiteres akzeptiert werden kann. Es hat sich auch weiter gezeigt, dass die Brandfestigkeit des fertigen Erzeugnisses durch die in den hohlen Teilchen enthaltenen Kohlenwasserstoff nicht negativ beeinflusst wird.

## Patentansprüche

1. Verfahren zum Herstellen von Kunststoffteilen, insbesondere Kunststoffprofilen, bei dem Füllstoffe in ein pulver- oder granulatförmiges thermoplastisches Kohlenstoffmaterial eingebracht werden, diese Mischung erwärmt und in die Kunststoffteile geformt wird, **dadurch gekennzeichnet, dass** expandierbare hohle Teilchen als Füllstoffe verwendet werden war, die mit einer bei erhöhter Temperatur verdampfenden Flüssigkeit gefüllt sind.

2. Verfahren nach Anspruch 1, **dadurch gekennzeichnet, dass** Hohlkugeln als Füllstoffe verwendet werden.

3. Verfahren nach Anspruch 1 oder 2, **dadurch gekennzeichnet, dass** Polypropylen als thermoplastischer Kunststoff verwendet wird.

4. Verfahren nach Anspruch 1 oder 2, **dadurch gekennzeichnet, dass** Polyethylen als thermoplastischer Kunststoff verwendet wird und die Mischung auf ungefähr 170° C erwärmt wird.

5. Verfahren nach Anspruch 1 oder 2, **dadurch gekennzeichnet, dass** Polykarbonat als thermoplastischer Kunststoff verwendet wird und die Mischung auf Temperaturen von bis zu ungefähr 300° C erwärmt wird.

6. Verfahren nach Anspruch 1 oder 2, **dadurch gekennzeichnet, dass** als Material für die Hülle des Füllstoffs Acrylnitril-Copolymer verwendet wird.

7. Verfahren nach einem der Ansprüche 2 bis 6, **dadurch gekennzeichnet, dass** die durchschnittliche Partikel größe ungefähr 10 bis 30 µm beträgt.

8. Verfahren nach einem der Ansprüche 2 bis 7, **dadurch gekennzeichnet, dass** die Hüllenstärke ungefähr 3 bis 7 µm beträgt

9. Verfahren nach einem der Ansprüche 1 bis 8, **dadurch gekennzeichnet, dass** die Kunststoffteile im Spritzgussverfahren hergestellt werden.

10. Verfahren nach einem der Ansprüche 1 bis 8, **dadurch gekennzeichnet, dass** die Kunststoffteile im Extrusionsverfahren hergestellt werden.

11. Verfahren nach einem der Ansprüche in 2 bis 11, **dadurch gekennzeichnet, dass** die Hohlkugeln aus thermoplastischem Material bestehen und mit flüssigem Kohlenwasserstoff gefüllt sind.

12. Verfahren nach Anspruch 11, **dadurch gekennzeichnet, dass** die Hohlkugeln 2,5 bis 10 Gewichtsprozent an 3-Metylpentan und/oder 2-Metylpentan als Treibmittel enthalten.

13. Verfahren nach Anspruch 11 oder 12, **dadurch gekennzeichnet, dass** die Hohlkugeln 7 bis 15 Gewichtsprozent Isooctan enthalten.

14. Verfahren nach einem der Ansprüche 1 bis 13, **dadurch gekennzeichnet, dass** der Mischung erwärmtes Silikonöl zugegeben wird.

15. Verfahren nach einem der Ansprüche 10 bis 14, **dadurch gekennzeichnet, dass** die Verweilzeit der Mischung im Extruder ungefähr 10 bis 40 Sekunden beträgt.

16. Verfahren nach einem der Ansprüche 10 bis 15, **dadurch gekennzeichnet, dass** die Kunststoffteile nach dem Austritt aus dem Extruder gekühlt werden.

17. Verfahren nach Anspruch 16, **dadurch gekennzeichnet, dass** Kunststoffprofile hergestellt werden, die nach dem Austritt aus dem Extruder zwischen Kühl- und Kalibrierflächen hindurchgeführt werden.

18. Verfahren nach Anspruch 17, **dadurch gekennzeichnet, dass** die Kühl- und Kalibrierflächen nachgiebig gelagert sind.
